# EUROPEAN PATENT SPECIFICATION

(11) **EP 1 801 986 B1**
(45) Date of publication and mention of the grant of the patent: **03.03.2010**
(21) Application number: 05257371.4
(22) Date of filing: 30.11.2005
(51) Int. Cl.: H04B 1/38

(54) **Wireless headset for a mobile phone**
Schnurloser Kopfhörer für ein Mobiltelefon
Casque sans fil pour un téléphone mobile

(43) Date of publication of application: 27.06.2007
(73) Proprietor: Research In Motion Limited, Waterloo, Ontario N2L 3W8 (CA)
(72) Inventor: Zhu, Lizhong, Waterloo, Ontario N2T 2T8 (CA); Mankaruse, George, Kitchener, Ontario N2H 5G1 (CA); Corrigan, Michael, Waterloo, Ontario N2T 1S5 (CA)
(74) Representative: Hibbert, Juliet Jane Grace

(56) References cited:
- WO-A-03/055183
- US-A1- 2003 044 033
- US-A1- 2003 123 686
- US-A1- 2005 181 844

## Description

### Field of the Invention

This invention relates to wireless headsets, and more particularly, this invention relates to wireless headsets that incorporate a Bluetooth module.

### Background of the Invention

Wireless headsets that incorporate a Bluetooth module to enable its wireless communications are becoming more commonplace and are advantageous because Bluetooth eliminates the connection of wires associated with most consumer computer equipment and allows a collection of products to function as an intelligent whole. It also makes location connectivity seamless. A Bluetooth system or module typically includes a radio, a baseband controller, a link manager, a logical link control, an adaptation protocol manager, host controller interface and application program interface library.

One common application of a Bluetooth module is with a headset for cellular or other mobile wireless communications devices. A wireless, Bluetooth headset would not require connecting wires between any mobile device and the headset. An example of such a headset is disclosed in WO03/055183. A drawback of this wireless or Bluetooth headset, however, concerns the RF interference that occurs from a mobile wireless communications device to the wireless headset. This interference can cause unwanted audible noise, such as Global System for Mobile communications (GSM) buzz, which can be annoying to users. US 2005/0181844 discloses a mobile electronic device having audio connector providing an antenna function. The electronic device comprises a bandpass filter component so that only a pre-defined frequency range can pass to a radio receiver.

### Summary of the Invention

A wireless headset has improved immunity to RF electromagnetic interference produced from wireless communication devices, for example, a cellular phone. A headset body is adapted to be worn by a user and includes a microphone carried by the headset body for receiving voice signals from the user and an earpiece carried by the headset body for directing voice signals into an ear canal of the user. RF and audio circuitry are mounted within the headset body and connected to an antenna for receiving and transmitting wireless communications signals. The RF and audio circuitry include a Bluetooth module operatively connected to the antenna and an audio CODEC connected to the Bluetooth module. Audio connection lines are connected between the CODEC and the earpiece and between the CODEC and the microphone. A filter is connected into each of the audio connection lines at the earpiece and microphone and operative for reducing the RF coupling from a wireless communications device.

In yet another non-limiting example, a filter is serially connected into each audio connection line and can be formed as a ferrite inductor, including a ferrite bead. The filter can also be formed as an LC filter serially connected into an audio connection line. In another aspect, a series connected inductor and capacitor can be connected into an audio connection line connected to the earpiece. The inductor could be formed as a ferrite inductor and an RF shield could surround one of at least the earpiece or microphone to aid in reducing the RF coupling from a mobile wireless communications device. This RF shield could be formed as a metallic housing.

In yet another aspect, microphone bias lines connect the CODEC and microphone for passing microphone bias control signals between the CODEC and the microphone. A microphone bias filter, in one non-limiting aspect, would be operative with the microphone bias lines for reducing the RF coupling from a wireless communications device. The microphone bias filter could be formed as a serial inductor, shunt capacitor, or ferrite bead. It can also be formed as a ground connected capacitor. A method aspect is also set forth.

### Brief Description of the Drawings

Other objects, features and advantages of the present invention will become apparent from the detailed description of the invention which follows, when considered in light of the accompanying drawings in which:

FIG. 1 is a perspective view of a wireless "Bluetooth" headset that can incorporate an RF filter to reduce RF coupling from a mobile wireless communications device, in accordance with one non-limiting example.

FIG. 2 is a block diagram showing basic functional components of a wireless or Bluetooth headset that could be adapted to incorporate an RF filter to decrease unwanted audible noise, such as GSM buzz.

FIG. 3 is a schematic circuit diagram showing a combination earpiece and filter circuit, which could be incorporated into the earpiece shown in FIG. 2.

FIG. 4 is a schematic circuit diagram showing a combination microphone and filter circuit, which could be incorporated into the microphone shown in FIG. 2.

FIG. 5 is a high-level block diagram of a Bluetooth module that could be used in the wireless headset shown in FIG. 2.

FIG. 6 is a high-level block diagram of an audio CODEC that could be used in the wireless headset shown in FIG. 2.

### Detailed Description of the Preferred Embodiments

Different embodiments will now be described more fully hereinafter with reference to the accompanying drawings, in which preferred embodiments are shown. Many different forms can be set forth and described embodiments should not be construed as limited to the embodiments set forth herein. Rather, these embodiments are provided so that this disclosure will be thorough and complete, and will fully convey the scope to those skilled in the art. Like numbers refer to like elements throughout, and prime notation is used to indicate similar elements in alternative embodiments.

In accordance with one non-limiting embodiment, RF filters and RF shielding can be implemented and applied to a microphone circuit and speaker circuit in a wireless "Bluetooth" headset. These types of filters and shielding can also be applied to a power supply circuit and other circuits to reduce the RF coupling from the wireless communications device to those circuits used in the Bluetooth headset, which causes the audible unwanted noise, such as GSM buzz.

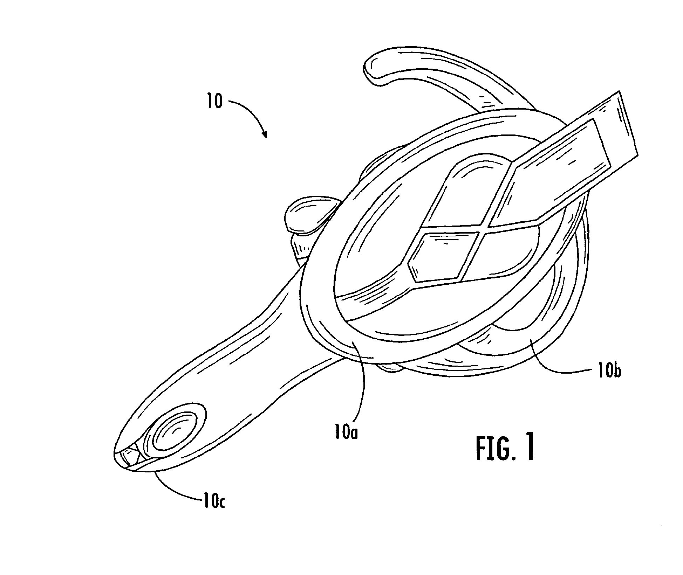

FIG. 1 is a perspective view of a wireless or Bluetooth headset illustrated generally at **10,** which includes a headset body **10a** that is adapted to be worn by a user at the ear of the user, and a pivoting, C-shaped earmount **10b** that wraps around the ear. When wrapped around the ear, an earpiece (not shown) carried by the headset body is engaged against the ear and directs voice signals into the ear canal of the user. A pivoting microphone arm **10c** supports a microphone that receives voice signals from the user. The illustrated wireless headset has no wires and can interact wirelessly with different Bluetooth compliant devices, for example, handsets, PDA's and computers. The pivoting microphone arm **10c** and earmount **10b** are foldable such that when unfolded, the headset **10** is activated, allowing ready connection into received or placed calls. The entire headset body **10a** can be worn over either ear of a user. A volume control (not shown) would typically remain in an upward position when it is worn.

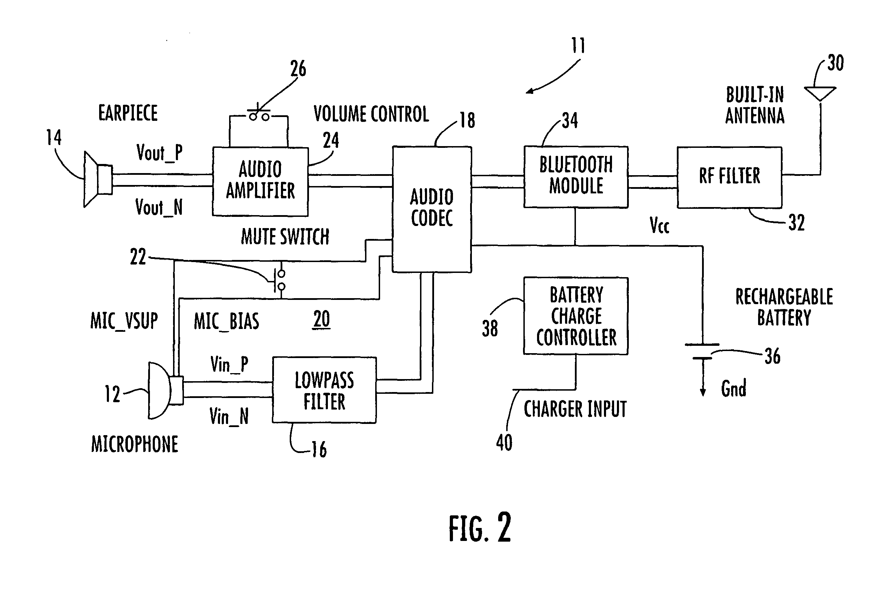

FIG. 2 is a high-level block diagram of the wireless Bluetooth headset **11,** which includes a microphone **12** and earpiece **14.** The microphone **12** is connected by dual input or audio connection lines Vin_P and Vin_N through a low pass filter **16** to an audio CODEC (COder-DECoder) **18,** which converts the analog signals to and from a digital data stream. A feedback loop **20** extends between the audio CODEC **18** and the microphone **12,** and includes a bias line (MIC_BIAS) and voltage line (MIC_VSUP) extending to the microphone **12,** forming microphone bias lines to allow microphone bias control signals to pass from the CODEC to the microphone. A mute switch **22** is connected into the two lines. The audio CODEC **18** also connects to an audio amplifier circuit **24,** which includes a volume control **26** connected in parallel. The audio amplifier **24** passes an analog output signal to the earpiece **14** through Vout_P and Vout_N signal or audio connection lines extending between the CODEC and earpiece. A built-in antenna **30** receives RF signals and passes them into an RF filter **32,** which filters the RF signals. The filtered signals are received in a Bluetooth module **34,** which is connected to a rechargeable battery **36** operative with a battery charge controller **38** and charger input **40.** The Bluetooth module **34** is operatively connected to the audio CODEC **18.** These components as illustrated and described could be formed on a circuit board or other support and mounted within the headset body **10a.** The different audio connection lines could be formed as signal or circuit traces or other means as known to those skilled in the art.

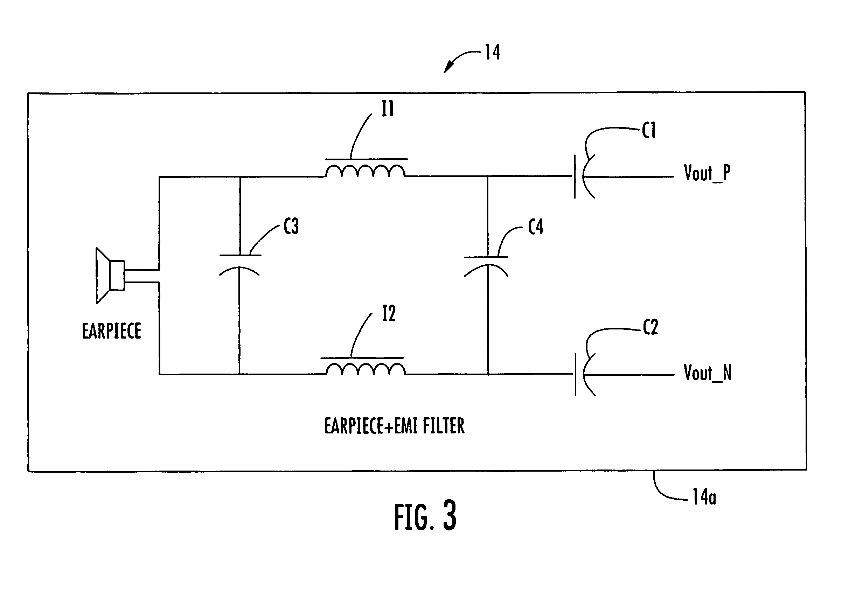

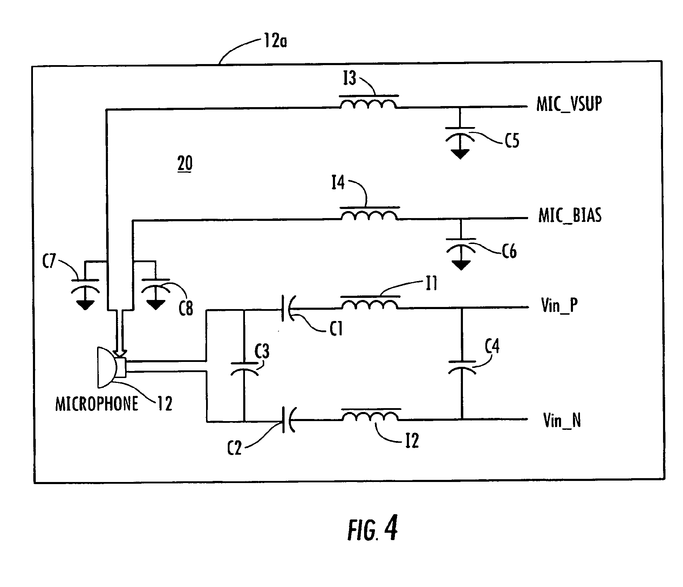

FIGS. 3 and 4 illustrate the type of Radio Frequency (RF) electromagnetic interference (EMI) filters that can be used for the microphone 12 (FIG. 4) and the earpiece **14** (FIG. 3).

FIG. 3 shows a filter for the earphone illustrating the Vout_P and Vout_N signal or audio connection lines. Each line includes an inductor element I1, I2 and series connected capacitor elements C1, C2. Two parallel capacitors C3 and C4 are connected as illustrated. The inductors in each line can be formed as ferrite inductors, including a ferrite bead.

As shown in FIGS. 2 and 4, the microphone **12** includes an output into the low pass filter **16** as Vin_P, Vin_N audio connection lines. A capacitor C1, C2 and an inductor I1, I2 as an inductive coil are connected into each Vin_P and Vin_N line. Capacitors C3, C4 are connected parallel into the Vin_P and Vin_N lines and positioned on either side of capacitors C1, C2 and inductors I1, I2 as illustrated. The feedback circuit **20** from audio CODEC **18** control includes two signal or microphone bias lines, MIC_VSUP and MIC_BIAS, and each line includes an inductive coil 13,14 and grounded capacitor C5, C6, followed by another ground connected capacitor C7, C8 mounted parallel and connected into each line as the signal enters the microphone as illustrated.

The RF filters as described could be RF ferrite beads, serially connected inductors, or shunt capacitors or a combination of both. In another aspect, an isolation RF shield as a metallic formed enclosure or "can" could surround and isolate the microphone or earpiece transducer from radiating energy depending on the design. The solid line **12a, 14a** in FIGS. 3 and 4 represents the "can" that could be used.

Different types, sizes and shapes of ferrite beads can be used. Typically, a ferrite bead is formed from a material having a permeability controlled by the composition of the different oxides, for example, a ferric oxide, sometimes with nickel and zinc added. The ferrite beads can sometimes be formed as ferrite sleeves with two half parts that are added onto a signal line or a solder overcoat on a signal trace. Typically, the longer the bead, the better the RF suppression. The bead equivalent circuit can be a series resistor and inductor.

Many of the components as described can be formed as an integrated circuit and contained within the headset body. The components can be mounted on a dielectric substrate, i.e., a circuit board. A circuit board could refer to any dielectric substrate, PCB, ceramic substrate or other circuit carrying structures for carrying signal circuits in electronic components. The battery 36 would typically be included within any headset housing for the Bluetooth headset. Ferrite beads or similar inductor components can also be used with modifications.

It should be understood that the RF and EMI filters as described relative to FIGS. 2-4 can be used in many different types of Bluetooth headsets. Typically, a Bluetooth headset includes a Bluetooth module and is operative as a wireless technology standard for connecting devices to replace cables. It typically operates in radio frequencies in the 2.5 GHz air interface and can transmit short distances of about 10 meters or less as a class 2 device. Usually, a Bluetooth system has a bandwidth of about one megabyte per second (1 MBPS) with individual packets of up to 2,745 bits. A class 1 Bluetooth device could have a signal strength up to about 100 milliwatts for a range of about 100 meters in certain applications.

Usually three basic components are incorporated in a Bluetooth module, including a processor, a baseband link controller that manages core Bluetooth processes, and a radio that implements the 2.5 GHz air interface.

The Bluetooth architecture typically includes an application program interface (API) libraries that are software modules that connect to host application programs to a Bluetooth communication system. The logical link control and adaptation protocol manages high level aspects of each connection, including encryption. It can convert the format of data between application program interfaces and lower level Bluetooth protocols. The link manager can manage physical details for Bluetooth connections. The baseband is a digital engine of a Bluetooth system. The Bluetooth radio converts digital baseband data to an from the 2.4 GHz analog signal typically using Gaussian frequency shift keying (GFSK) modulation.

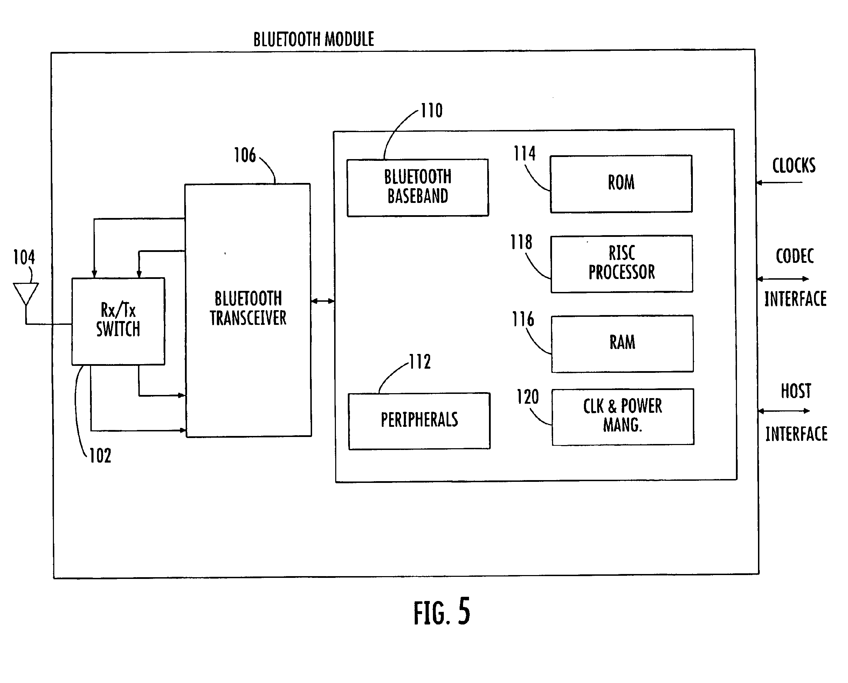

FIG. 5 is a block diagram of a typical Bluetooth module **100** that can be used with the different embodiments of a Bluetooth headset. As illustrated, a receive/transmit (Rx/Tx) switch **102** receives signals from an antenna **104** (which could correspond to antenna **30** described relative to FIG. 2) and is operative with a Bluetooth transceiver **106,** operative with Bluetooth components that receive clock signals and are operative with a CODEC interface and Host interface. These functional components include a Bluetooth baseband circuit **110,** peripherals circuit **112,** ROM **114** and RAM **116,** a RISC processor **118** and clock and power management circuit **120.** Of course, many other components could be used as known to and suggested by those skilled in the art. An example of such a functional Bluetooth module is a BRF 6100/6150 Bluetooth module manufactured by Texas Instruments.

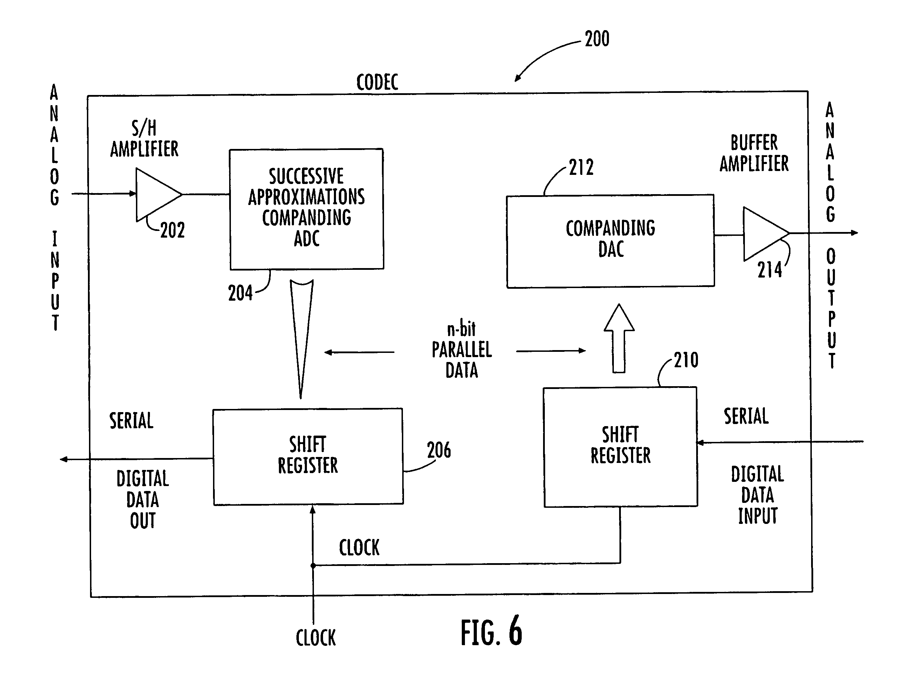

Different types of CODEC's can also be used in the circuit shown in FIG. 2, and an example CODEC is shown in FIG. 6 at **200,** and could be used in a Bluetooth headset and operative with the Bluetooth module. For example, as illustrated, the CODEC could include an analog input into a S/H (Sample/Hold) amplifier **202** that passes to a successive approximations companding analog-to-digital converter (ADC) **204.** A shift register **206** receives the signal from the successive approximations companding ADC **204** and produces a serial digital data output. A clock signal is applied to the shift register **206** and also applied to a second shift register **210** that sends data to a companding digital-to-analog converter (DAC) **212** that transmits the converted signal through a buffer amplifier **214** as an analog output. Serial digital data input is received in the second shift register. N-bit parallel data pass between components as illustrated.

The CODEC could include a transmit functional component that includes an analog input, amplifier, filters, sample and hold circuit comparator, successive approximation circuit, and an output register with feedback and control logic. The CODEC could also include a receive function that includes an input register, digital-to-analog converter (DAC), receive control logic that inputs into a sample and hold (S/H) circuit, which is buffered and filtered using an adder and gain set logic. General control logic could be operative with the digital-to-analog converter and receive control logic. The sample and hold circuit could receive a reference.

It should also be understood that the CODEC can use delta modulation to minimize the effects of noise without increasing the number of bits being transmitted. Adaptive delta modulation could also be used, which aids in overcoming the slope overload problem by varying the step size such that the quantized signal more closely follows the original signal.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A wireless headset (10) having improved immunity to RF electromagnetic interference produced from wireless communications devices comprising:
a headset body (10a) adapted to be worn by a user;
a microphone (12) carried by the headset body for receiving voice signals from the user;
an earpiece (14) carried by the headset body for directing voice signals into an ear canal of the user;
an antenna (30) carried by the headset body for receiving wireless communications signals;
RF and audio circuitry mounted within the headset body for receiving and transmitting wireless communications signals, said RF and audio circuitry comprising a Bluetooth module (34) operatively connected to said antenna for transmitting and receiving wireless communications signals, an audio CODEC (18) connected to said Bluetooth module, and audio connection lines connected between said CODEC and said earpiece and connected between said CODEC and said microphone; **characterized in that** it further comprises
a filter (C1 to C4,I1,I2) connected into each of the audio connection lines at the earpiece and microphone and operative for reducing the RF coupling from a wireless communications device.

2. A wireless headset (10) according to Claim 1, wherein a filter is serially connected into each audio connection line.

3. A wireless headset (10) according to Claim 1, wherein a filter comprises a ferrite inductor.

4. A wireless headset (10) according to Claim 1, wherein a filter comprises a ferrite bead.

5. A wireless headset (10) according to Claim 1, wherein a filter comprises an LC filter serially connected into an audio connection line.

6. A wireless headset (10) according to Claim 1, and further comprising a series connected inductor and capacitor connected into an audio connection line that is connected to said earpiece.

7. A wireless headset (10) according to Claim 6, wherein said inductor comprises a ferrite inductor.

8. A wireless headset (10) according to Claim 1, and further comprising an RF shield (12a, 14a) surrounding one of at least the earpiece or microphone to aid in reducing the RF coupling from a wireless communications device.

9. A wireless headset (10) according to Claim 8, wherein said RF shield comprises a metallic housing.

10. A wireless headset (10) according to Claim 1, wherein said headset body includes a pivoting microphone arm (10c) that supports the microphone.

11. A wireless headset (10) according to Claim 1, and further comprising an earmount (10b) pivotally connected to said headset body.

12. A wireless headset (10) according to Claim 1, and further comprising:
microphone bias lines connecting the CODEC and microphone for passing microphone bias control signals between the CODEC and the microphone; and
a microphone bias filter (I3, C5 and I4, C6) connected into each of the microphone bias lines for reducing the RF coupling from a wireless communications device.

13. A wireless headset (10) according to Claim 12, wherein said microphone bias filter comprises a serial inductor or shunt capacitor.

14. A wireless headset (10) according to Claim 12, wherein said microphone bias filter comprises a ferrite bead.

15. A wireless headset (10) according to Claim 12, wherein said microphone bias filter comprises a ground connected capacitor (C7, C8).

16. A method of making a wireless headset (10) having improved immunity to RF electromagnetic interference produced from wireless communications devices, which comprises:
providing a headset body (10a) adapted to be worn by a user, a microphone (12) carried by the headset body for receiving voice signals from the user, an earpiece (14) carried by the headset body for directing voice signals into an ear canal of the user, an antenna (30) carried by the headset body for receiving wireless communications signals, RF and audio circuitry mounted within the headset body for receiving and transmitting wireless communications signals, said RF and audio circuitry comprising a Bluetooth module (34) operatively connected to said antenna for transmitting and receiving wireless communications signals and an audio CODEC (18) connected to said Bluetooth module; **characterized by**
reducing the RF coupling from a wireless communications device by connecting a filter (C1 to C4,I1,I2) into audio connection lines that connect the earpiece and microphone with the CODEC.

17. A method according to Claim 16, which further comprises enclosing one of at least the microphone or earpiece within an RF shield (12a, 14a) for reducing the RF coupling from a mobile wireless communications device.

18. A method according to Claim 16, which further comprises connecting a filter serially into an audio connection line.

19. A method according to Claim 16, which further comprises connecting a ferrite bead into an audio connection line.

20. A method according to Claim 16, which further comprises connecting a microphone bias filter (13, C5 and 14, C6) into microphone bias lines that pass microphone bias control signals between the CODEC and the microphone.

## Patentansprüche

1. Drahtloses Headset bzw. Kopfhörer (10) mit einer verbesserten Immunität gegenüber elektromagnetischer HF-Interferenz, die von drahtlosen Kommunikationsvorrichtungen erzeugt wird, das aufweist:
ein Kopfhörergehäuse (10a), das ausgebildet ist, durch einen Benutzer getragen zu werden;
ein Mikrofon (12), das an dem Kopfhörergehäuse angebracht ist, zum Empfangen von Sprachsignalen von dem Benutzer;
eine Hörmuschel (14), die an dem Kopfhörergehäuse angebracht ist, zum Leiten von Sprachsignalen in einen Ohrkanal des Benutzers;
eine Antenne (30), die an dem Kopfhörergehäuse angebracht ist, zum Empfangen drahtloser Kommunikationssignale;
HF- und Audioschaltungen, die in dem Kopfhörergehäuse untergebracht sind, zum Empfangen und Senden von drahtlosen Kommunikationssignalen, wobei die HF- und Audioschaltungen ein
Bluetooth-Modul (34) aufweisen, das betriebsfähig mit der Antenne verbunden ist, zum Senden und Empfangen von drahtlosen Kommunikationssignalen, ein Audio-CODEC (18), der mit dem Bluetooth-Modul verbunden ist, und Audioverbindungsleitungen, die zwischen dem CODEC und der Hörmuschel verbunden sind und zwischen dem CODEC und dem Mikrofon verbunden sind;
**dadurch gekennzeichnet, dass** es weiter aufweist:
einen Filter (C1 bis C4, I1,I2), der in jeder der Audioverbindungsleitungen an der Hörmuschel und dem Mikrofon verbunden ist und betriebsfähig ist, die HF-Kopplung von einer drahtlosen Kommunikationsvorrichtung zu reduzieren.

2. Drahtloses Headset (10) gemäß Anspruch 1, wobei ein Filter in Serie in jeder Audioverbindungsleitung verbunden ist.

3. Drahtloses Headset (10) gemäß Anspruch 1, wobei ein Filter einen Ferrit-Induktor aufweist.

4. Drahtloses Headset (10) gemäß Anspruch 1, wobei ein Filter einen Ferritkern aufweist.

5. Drahtloses Headset (10) gemäß Anspruch 1, wobei ein Filter einen LC-Filter aufweist, der in Serie in einer Audioverbindungsleitung verbunden ist.

6. Drahtloses Headset (10) gemäß Anspruch 1, und weiter aufweisend einen seriengeschalteten Induktor und einen Kondensator, die in einer Audioverbindungsleitung verbunden sind, die mit der Hörmuschel verbunden ist.

7. Drahtloses Headset (10) gemäß Anspruch 6, wobei der Induktor einen Ferrit-Induktor aufweist.

8. Drahtloses Headset (10) gemäß Anspruch 1, und weiter eine HF-Abschirmung (12a, 14a) aufweisend, die zumindest eine der Hörmuschel oder des Mikrofons umgibt, um eine Reduzierung der HF-Koppelung von einer drahtlosen Kommunikationsvorrichtung zu unterstützen.

9. Drahtloses Headset (10) gemäß Anspruch 8, wobei die HF-Abschirmung ein metallisches Gehäuse aufweist.

10. Drahtloses Headset (10) gemäß Anspruch 1, wobei das Kopfhörergehäuse einen schwenkbaren Mikrofonarm (10c) umfasst, der das Mikrofon trägt.

11. Drahtloses Headset (10) gemäß Anspruch 1, und weiter eine Ohrbefestigung (10b) aufweist, die schwenkbar mit dem Kopfhörergehäuse verbunden ist.

12. Drahtloses Headset (10) gemäß Anspruch 1, und weiter aufweisend:
Mikrofon-Bias-Leitungen, die den CODEC und das Mikrofon verbinden zum Leiten von Mikrofon-Bias-Steuerungssignale zwischen dem CODEC und dem Mikrofon; und
einen Mikrofon-Bias-Filter (I3, C5 und I4, C6), der in jeder der Mikrofon-Bias-Leitungen verbunden ist, zum Reduzieren der HF-Koppelung von einer drahtlosen Kommunikationsvorrichtung.

13. Drahtloses Headset (10) gemäß Anspruch 12, wobei der Mikrofon-Bias-Filter einen seriellen Induktor oder Shunt-Kondensator aufweist.

14. Drahtloses Headset (10) gemäß Anspruch 12, wobei der Mikrofon-Bias-Filter einen Ferritkern aufweist.

15. Drahtloses Headset (10) gemäß Anspruch 12, wobei der Mikrofon-Bias-Filter einen mit Masse verbundenen Kondensator (C7, C8) aufweist.

16. Verfahren zur Herstellung eines drahtlosen Kopfhörers (10) mit einer verbesserten Immunität gegenüber elektromagnetischer HF-Interferenz, die von drahtlosen Kommunikationsvorrichtungen erzeugt wird, das aufweist:
Vorsehen eines Kopfhörergehäuses (10a), das ausgebildet ist, durch einen Benutzer getragen zu werden, eines Mikrofons (12), das an dem Kopfhörergehäuse angebracht ist, zum Empfangen von Sprachsignalen von dem Benutzer, einer Hörmuschel (14), die an dem Kopfhörergehäuse angebracht ist, zum Leiten von Sprachsignalen in einen Ohrkanal des Benutzers, einer Antenne (30), die an dem Kopfhörergehäuse angebracht ist, zum Empfangen drahtloser Kommunikationssignale, von HF- und Audioschaltungen, die in dem Kopfhörergehäuse untergebracht sind, zum Empfangen und Senden von drahtlosen Kommunikationssignalen, wobei die HF- und Audioschaltungen ein Bluetooth-Modul (34) aufweisen, das betriebsfähig mit der Antenne verbunden ist, zum Senden und Empfangen von drahtlosen Kommunikationssignalen, und eines Audio-CODECs (18), der mit dem Bluetooth-Modul verbunden ist;
**gekennzeichnet durch**
Reduzieren der HF-Kopplung von einer drahtlosen Kommunikationsvorrichtung **durch** Verbinden eines Filters (C1 bis C4, I1, I2) in Audioverbindungsleitungen, die die Hörmuschel und das Mikrofon mit dem CODEC verbinden.

17. Verfahren gemäß Anspruch 16, das weiter aufweist ein Umschließen eines aus zumindest dem Mikrofon oder der Hörmuschel in einer HF-Abschirmung (12a, 14a) zum Reduzieren der HF-Koppelung von einer mobilen drahtlosen Kommunikationsvorrichtung.

18. Verfahren gemäß Anspruch 16, das weiter aufweist ein Verbinden eines Filters in Serie in einer Audioverbindungsleitung.

19. Verfahren gemäß Anspruch 16, das weiter aufweist ein Verbinden eines Ferritkerns in eine Audioverbindungsleitung.

20. Verfahren gemäß Anspruch 16, das weiter aufweist ein Verbinden eines Mikrofon-Bias-Filters (I3, C5 und I4, C6) in Mikrofon-Bias-Leitungen, die Mikrofon-Bias-Steuerungssignale zwischen dem CODEC und dem Mikrofon leiten.

## Revendications

1. Casque sans fil (10) ayant une meilleure immunité aux interférences électromagnétiques RF produites par des dispositifs de communication sans fil, comprenant :
un corps de casque (10a), conçu pour être porté par un utilisateur ;
un microphone (12) porté par le corps de casque, destiné à recevoir des signaux vocaux de l'utilisateur ;
un écouteur (14) porté par le corps de casque, destiné à envoyer des signaux vocaux dans le canal auriculaire de l'utilisateur ;
une antenne (30) portée par le corps de casque, destinée à recevoir des signaux de communication sans fil ;
des circuits RF et audio montés à l'intérieur du corps de casque, destinés à recevoir et à émettre des signaux de communication sans fil, lesdits circuits RF et audio comprenant un module Bluetooth (34) connecté en service à ladite antenne pour émettre et recevoir des signaux de communication sans fil, un codec audio (18) connecté audit module Bluetooth et des lignes de connexion audio connectées entre ledit codec et ledit écouteur et connectées entre ledit codec et ledit microphone ;
**caractérisé en ce qu'**il comprend en outre :
un filtre (C1 à C4, I1, 12) monté sur chacune des lignes de connexion audio au niveau de l'écouteur et du microphone et en mesure de réduire le couplage RF provenant d'un dispositif de communication sans fil.

2. Casque sans fil (10) selon la revendication 1, dans lequel un filtre est monté en série sur chaque ligne de connexion audio.

3. Casque sans fil (10) selon la revendication 1, dans lequel un filtre comprend une inductance en ferrite.

4. Casque sans fil (10) selon la revendication 1, dans lequel un filtre comprend une perle en ferrite.

5. Casque sans fil (10) selon la revendication 1, dans lequel un filtre comprend un filtre LC monté en série sur une ligne de connexion audio.

6. Casque sans fil (10) selon la revendication 1, comprenant en outre une inductance et un condensateur montés en série sur une ligne de connexion audio connectée audit écouteur.

7. Casque sans fil (10) selon la revendication 6, dans lequel ladite inductance comprend une inductance en ferrite.

8. Casque sans fil (10) selon la revendication 1, comprenant en outre un blindage RF (12a, 14a) entourant un élément au moins parmi l'écouteur et le microphone, afin de contribuer à réduire le couplage RF avec un dispositif de communication sans fil.

9. Casque sans fil (10) selon la revendication 8, dans lequel ledit blindage RF comprend un boîtier métallique.

10. Casque sans fil (10) selon la revendication 1, dans lequel ledit corps de casque comprend un bras pivotant de microphone (10c) qui supporte le microphone.

11. Casque sans fil (10) selon la revendication 1, comprenant en outre une monture d'oreille (10b) connectée de manière pivotante audit corps de casque.

12. Casque sans fil (10) selon la revendication 1, comprenant en outre :
des lignes de polarisation de microphone connectant le codec et le microphone afin de transporter des signaux de commande de la polarisation du microphone entre le codec et le microphone ; et
un filtre de polarisation de microphone (13, C5 et 14, C6) connecté sur chacune des lignes de polarisation de microphone pour réduire le couplage RF avec un dispositif de communication sans fil.

13. Casque sans fil (10) selon la revendication 12, dans lequel ledit filtre de polarisation de microphone comprend une inductance en série ou un condensateur en parallèle.

14. Casque sans fil (10) selon la revendication 12, dans lequel ledit filtre de polarisation de microphone comprend une perle en ferrite.

15. Casque sans fil (10) selon la revendication 12, dans lequel ledit filtre de polarisation de microphone comprend un condensateur (C7, C8) connecté à la masse.

16. Procédé destiné à donner à un casque sans fil (10) une meilleure immunité aux interférences électromagnétiques RF produites par des dispositifs de communication sans fil, comprenant l'étape consistant à :
fournir un corps de casque (10a) conçu pour être porté par un utilisateur, un microphone (12) porté par le corps de casque, destiné à recevoir des signaux vocaux de l'utilisateur, un écouteur (14) porté par le corps de casque, destiné à envoyer des signaux vocaux dans le canal auriculaire de l'utilisateur, une antenne (30) portée par le corps de casque, destinée à recevoir des signaux de communication sans fil, des circuits RF et audio montés à l'intérieur du corps de casque, destinés à recevoir et à émettre des signaux de communication sans fil, lesdits circuits RF et audio comprenant un module Bluetooth (34) connecté en service à ladite antenne pour émettre et recevoir des signaux de communication sans fil et un codec audio (18) connecté audit module Bluetooth ;
**caractérisé par** l'étape consistant à :
réduire le couplage RF avec un dispositif de communication sans fil en connectant un filtre (C1 à C4, I1, 12) sur les lignes de connexion audio qui connectent l'écouteur et le microphone au codec.

17. Procédé selon la revendication 16, comprenant en outre l'étape consistant à enfermer au moins un élément parmi le microphone et l'écouteur dans un blindage RF (12a, 14a) afin de réduire le couplage RF avec un dispositif de communication sans fil.

18. Procédé selon la revendication 16, comprenant en outre l'étape consistant à monter un filtre en série sur une ligne de connexion audio.

19. Procédé selon la revendication 16, comprenant en outre l'étape consistant à connecter une perle en ferrite sur une ligne de connexion audio.

20. Procédé selon la revendication 16, comprenant en outre l'étape consistant à connecter un filtre de polarisation de microphone (13, C5 et 14, C6) sur des lignes de polarisation de microphone qui transportent des signaux de commande de la polarisation du microphone entre le codec et le microphone.
